# EUROPEAN PATENT SPECIFICATION

(11) **EP 3 758 506 B1**
(45) Date of publication and mention of the grant of the patent: **03.06.2026**
(21) Application number: 19701892.2
(22) Date of filing: 04.02.2019
(51) Int. Cl.: A23L 27/10

(54) **AQUEOUS COMPOSITION CONTAINING SALT, ACETIC ACID, AND SUGARS**
WÄSSRIGE ZUSAMMENSETZUNG MIT SALZ, ESSIGSÄURE UND ZUCKER
COMPOSITION AQUEUSE CONTENANT DU SEL, DE L'ACIDE ACÉTIQUE ET DES SUCRES

(30) Priority: 02.03.2018 EP 18159623
(43) Date of publication of application: 06.01.2021
(73) Proprietor: Unilever IP Holdings B.V., 6708 WH Wageningen (NL)
(72) Inventor: MERKL, Susanne Kerstin, 74074 Heilbronn (DE); RUBESA, Tino, 3133 AT Vlaardingen (NL); SCHMIDT, István, 74074 Heilbronn (DE); TIMMER, Johannes, 3133 AT Vlaardingen (NL); TOTH, Marcell Läszló, 74074 Heilbronn (DE); UECKERT, Joerg Erwin, 3133 AT Vlaardingen (NL)
(74) Representative: Unilever Patent Group
(86) International application number: PCT/EP2019/052649
(87) International publication number: WO 2019/166188

(56) References cited:
- WO-A1-2017/046301
- KIM J W ET AL: "INHIBITORY ACTIVITY OF ESSENTIAL OILS OF GARLIC AND ONION AGAINST BACTERIA AND YEASTS", JOURNAL OF FOOD PROTEC, INTERNATIONAL ASSOCIATION FOR FOOD PROTECTION, US, vol. 67, no. 3, 1 March 2004 (2004-03-01), pages 499 - 504, XP009055012, ISSN: 0362-028X

## Description

### FIELD OF THE INVENTION

The present invention relates to an aqueous composition containing salt, acetic acid, and sugars which can be used as a sauce or a seasoning. The invention also provides a method for preparation of the composition. Finally, the invention provides use of the composition to reduce the growth of yeasts and/or moulds in aqueous food products.

### BACKGROUND TO THE INVENTION

Liquid seasonings can be used to provide taste and flavour to foods. Usually they are used as an additive to dishes like vegetables or meat, as moisturiser, marinade, or taste maker. Seasonings generally contain a mix of salts, acids, herbs, spices, and other taste enhancers. When cooking, seasonings are generally used in relatively small amounts, which means that some seasoning that often some seasoning is left over in its packaging after use. Therefore, the composition of a liquid seasoning should be such that it can be kept without spoilage. Usually liquid seasonings contain a large amount of salt (e.g. sodium chloride) which act as a preservative. Such large amounts of salt decrease the ability for a chef to freely use a range of ingredients, as the salt may be overdosed and it will be very difficult to adapt the taste of the dish to the chef's wish. Moreover, current trend is to reduce salt consumption as much as possible, in order to prevent that health issues arise.

WO 2017/046301 A1 discloses savoury concentrates containing a combination of two starches in relatively high amounts to obtain a flowable texture. The salt levels of these compositions are also relatively high.

WO 2014/053287 A1 and WO 2014/053288 A1 relate to compositions in gel form for preparing food products. The compositions comprise xanthan gum or carrageenan, ungelatinized starch, and salt.

WO 2012/023058 A2 relates to composition for use as food preservative, in particular to sodium-free compositions. The compositions contain sodium chloride and/or potassium chloride, and optionally sugar.

US 6,379,739 B1 relates to an acidulant system for marinades for meat and fish comprising sodium citrate and citric acid in specified ranges.

J.W. Kim et al. (Journal of Food Protection, 2004, 67(3), 499-504), report on the inhibitory activity of essential oils of garlic and onion against bacteria and yeasts.

### SUMMARY OF THE INVENTION

Therefore, there is a desire to reduce the salt content of liquid seasonings, without compromising on keepability and without spoilage during storage of the product. Moreover, an additional objective is that the amount of 'chemical' preservatives is reduced or even omitted, as consumers and professional chefs more and more tend to reject food products that contain compounds which can be regarded to be artificial or chemical.

This problem has now been solved by an aqueous composition that contains salt in a relatively low concentration, and further contains sugars, and acetic acid to achieve a pH between 3 and 4.6, and that is not spoiled during storage. This natural combination of compounds is sufficient to create a composition which does not need preservatives to make the composition storage stable during a long period. The relatively low salt level makes this product very versatile: a chef can use it freely, without the risk of overdosing the salt level of a prepared food dish. The composition can be stored open for example for 3 months (meaning that the packaging has been opened by the consumer and closed again) or up to a year closed shelf life (both at room temperature). In particular yeasts and/or moulds do not grow during shelf-life, in spite of the water activity of the composition, which is still relatively high (due to the relatively low salt concentration).

Accordingly, in a first aspect, the invention provides a composition comprising
9-14% by weight of sodium chloride and/or potassium chloride;
7-22% by weight of one or more compounds selected from monosaccharides, disaccharides, and oligosaccharides;
0.5-2% by weight of acetic acid;
0-3% by weight of physically modified starch;
50-70% by weight of water;
and having a pH ranging from 3.0 to 4.6;
and having a water activity ranging from 0.85 to 0.89;
and wherein the composition is free from chemically modified starches, enzymatically modified starches, and native starches.

According to a second aspect of the invention, the invention provides a method for preparation of a composition as defined in the first aspect of the invention, comprising the steps:
(i) mixing ingredients with water; and
(ii) heating the mixture from step (i); and
(iii) filling the mixture from step (ii) into packaging.

According to a third aspect of the invention, the invention provides use of a composition as defined in the first aspect of the invention to reduce the growth of yeasts and/or moulds in an aqueous food product.

### DETAILED DESCRIPTION OF THE INVENTION

All percentages, unless otherwise stated, refer to the percentage by weight (wt%).

Except in the operating and comparative examples, or where otherwise explicitly indicated, all numbers in this description indicating amounts or ratios of material or conditions of reaction, physical properties of materials and/or use are to be understood as modified by the word "about".

The composition of the invention preferably is a pourable composition at 5°C and at 20°C. "Pourable" is understood to mean that a composition is free-flowing, for example from a bottle in which the composition is retained. Preferably the composition of the invention is not in gel form. Preferably the Bostwick value of the composition ranges from 9 to 17 cm/30 sec. The Bostwick value is a measurement of consistency: higher value means lower consistency. Measurement is done using a CSC Bostwick Consistometer (e.g., Fisher Scientific, no. 1534750) at a temperature of 20°C, for 30 seconds and taken to the nearest 0.1 cm.

The composition of the invention is an aqueous composition, the amount of water ranges from 50-70% by weight. During preparation of the composition, pure water can be used, or water can be present as a compound of other ingredients of the composition (e.g. in vinegar).

Preferably the composition is an edible composition. The composition preferably can be used as a food product, e.g. as a sauce or as a seasoning.

A "monosaccharide" is the basic unit of a carbohydrate, and they are the simplest form of sugars. Examples of monosaccharides are glucose, and fructose. A "disaccharide" is a chemical compound which is formed by the reaction between two monosaccharides.

Examples are sucrose and maltose. As used herein, the term "oligosaccharide" refers to saccharides with a degree of polymerisation (DP) of at least 3 to 9.

In the context of the present invention, the total amount of acetic acid is expressed as the combination of dissociated and undissociated acetic acid. The total concentration of acetic acid (dissociated and undissociated) as specified in combination with a pH ranging from 3.0 to 4.6, means that the composition contains undissociated acetic acid at a concentration of at least 0.2% by weight. The pH mentioned herein are determined at a temperature of 20°C. Preferably the pH of the composition ranges from 3.2 to 4.4, more preferred from 3.4 to 4.2, more preferred from 3.5 to 4.

Preferably, the composition comprises from 9 to 13% by weight of sodium chloride and/or potassium chloride, preferably from 9 to 12% by weight, preferably from 9 to 10% by weight, preferably from 9 to less than 10% by weight, preferably from 9 to 9.9% by weight. Preferably the salt used in the composition is sodium chloride. Preferably the total amount of salt in the composition is provided by sodium chloride and/or potassium chloride. Preferably the composition does not contain other salts than sodium chloride and/or potassium chloride. Nevertheless, other ingredients added to the composition may contain traces of salts. In case the salt level is less than 10%, then preferably the pH of the composition is below 4.

Preferably, the composition comprises a preservative at a concentration of less than 0.1% by weight, preferably is free from a preservative. In the context of the present invention, "preservative" means compounds which can be regarded by consumers to be chemicals and which are specifically added to a composition to prevent growth of undesired micro-organisms like bacteria, yeasts and moulds, and thus to extend its shelf life. Preferably the composition of the invention comprises one or more of the following compounds at a total concentration of less than 0.1% by weight, more preferred the composition does not contain any of the following compounds: sorbic acid, sodium sorbate, potassium sorbate, calcium sorbate, heptyl p-hydroxybenzoate, benzoic acid, sodium benzoate, potassium benzoate, calcium benzoate, ethylparaben (ethyl para-hydroxybenzoate), sodium ethyl para-hydroxybenzoate, propylparaben (propyl para-hydroxybenzoate), sodium propyl para-hydroxybenzoate, methylparaben (methyl para-hydroxybenzoate), sodium methyl para-hydroxybenzoate, sulphur dioxide, sodium sulphite, sodium bisulphite (sodium hydrogen sulphite), sodium metabisulphite, potassium metabisulphite, potassium sulphite, calcium sulphite, calcium hydrogen sulphite (preservative), potassium hydrogen sulphite, biphenyl, diphenyl, orthophenyl phenol, sodium orthophenyl phenol, thiabendazole, nisin, natamycin, pimaracin, formic acid, sodium formate, calcium formate, hexamine (hexamethylene tetramine), formaldehyde, dimethyl dicarbonate, potassium nitrite, sodium nitrite, sodium nitrate (chile saltpeter), potassium nitrate (saltpetre), dehydroacetic acid, sodium dehydroacetate, propionic acid, sodium propionate, calcium propionate, potassium propionate, boric acid, and sodium tetraborate (borax). Nevertheless, minute quantities of any of these compounds may be part of the composition, in case such compound is naturally present in any ingredient or raw material used to prepare the composition of the invention. Nevertheless, most preferred none of these compounds is added as such to the composition with the aim to act as a preservative.

The composition of the invention may comprise physically modified starch, at a concentration of maximally 3% by weight. The composition may also be free from physically modified starch. Preferably, the concentration of physically modified starch ranges from 0 to less than 3% by weight, preferably from 0 to 2% by weight. More preferred, the concentration of physically modified starch ranges from 0 to 1% by weight. In case physically modified starch is present, then preferably the concentration is at least 0.01% by weight.

"Physically modified starch" means a starch which has been subjected to a heat treatment in the presence of relatively small amounts of water or moisture. No other reagents are added to the starch during the heat treatment. The heat-treatment processes include heat-moisture and annealing treatments, both of which cause a physical modification of starch without any gelatinization, damage to granular integrity, or loss of birefringence (Miyazaki et al., Trends in Food Science & Technology 17 (2006) p.591-599). Annealing represents "physical modification of starch slurries in water at temperatures below gelatinisation", whereas heat-moisture treatment refers to "the exposure of starch to higher temperatures at very restricted moisture content (18-27%)" (Tester et al., International Journal of Biological Macromolecules 27(2000) p.1-12). Physical modification should be distinguished from gelatinisation of starch, which usually is carried out by heating starch in an excess amount of water. Other terms which are used for this type of starch are "heat-treated starch" and "heat-modified starch".

Preferably, the physically modified starch is obtainable by drying native starch to a relative humidity of less than 3%, and subsequently heating the starch at a temperature ranging from 150°C to 200°C during a time period of at least 30 minutes. Preferably, the physically modified starch is obtained by drying native starch to a relative humidity of less than 3%, and subsequently heating the starch at a temperature ranging from 150°C to 200°C during a time period of at least 30 minutes. Preferably the physically modified starch is a starch as described in WO 95/04082, which is herein incorporated by reference.

Preferably the pH of the native starch before the starch is dried is at its natural pH and does not require adjustment. Alternatively, the pH of the native starch before drying is adjusted to a pH which is neutral or basic. Preferably, the pH of the native starch before drying ranges from 7 to 12, preferably from 7.5 to 12, preferably from 8.0 to 10.5. Native starch may be slightly acidic to neutral, and in such case adjustment of the pH preferably is done to a pH within the preferred range. Adjustment of the pH preferably is performed with food-grade bases selected from sodium hydroxide, sodium carbonate, tetrasodium pyrophosphate, ammonium orthophosphate, disodium orthophosphate, trisodium phosphate, calcium carbonate, calcium hydroxide, potassium carbonate, and potassium hydroxide, or any mixture of these bases.

The drying of the starch to the desired moisture level preferably is done simultaneously with the heating of the starch to the required heating temperature. Such heating from ambient temperature to the required heating temperature may be done within a time period ranging up to 5 hours, preferably up to 3 hours. The heating preferably is done at a temperature ranging from 150°C to 190°C, preferably from 160°C to 180°C. The heating time at the required temperature preferably ranges from 30 minutes to 6 hours, preferably from 30 minutes to 4 hours, preferably from 1 to 3 hours, preferably maximally 2 hours.

In case physically modified starch is present, then preferably it is not pre-gelatinised, meaning that the physically modified starch preferably requires to be cooked-up before it can be used to prepare the composition of the invention.

Preferably, the physically modified starch comprises physically modified waxy corn starch. A suitable physically modified starch for use in the composition in the invention is Novation Prima 300 (Ingredion Inc., Westchester, IL, USA).

In case the composition of the invention contains starches, then preferably it contains only physically modified starch at the concentrations as indicated. The composition is free from chemically modified starches and enzymatically modified starches. Native starch is absent as well. Native starch in the context of the present invention means starches which are not chemically or enzymatically modified and which are not physically modified starches. An "enzymatically modified starch" means a starch which has been treated with one or more enzymes to modify its properties. A "chemically modified starch" means a starch which has been reacted with reagents which have been added to the starch in order to form new covalent bonds between those molecules and the starch molecules. The total amount of starches is maximally 3% by weight of the composition, preferably less than 3% by weight of the composition. If starches are present, then these starches are only physically modified starches.

In addition to acetic acid, the composition may comprise lactic acid at a concentration ranging from 0.05% to 1% by weight. More preferred though, lactic acid is absent from the composition.

The composition comprises from 7 to 22% by weight of compounds selected from monosaccharides, disaccharides, and oligosaccharides, preferably from 8 to 21% by weight, more preferred from 10 to 21% by weight, more preferred from 15 to 20% by weight. Preferably the one or more compounds selected from monosaccharides, disaccharides, and oligosaccharides are at least partly provided to the composition as compounds of glucose syrup. Therefore, preferably, the composition comprises glucose syrup to provide one or more compounds selected from monosaccharides, disaccharides, and oligosaccharides. Preferably the dextrose equivalent (DE) of the glucose syrup ranges from 54 to 65. The concentration of the glucose syrup preferably ranges from 10% to 20% by weight. Preferably the glucose syrup has a solids content ranging from 40 to 65%. Preferably the glucose syrup is pourable at a temperature of 20°C, more preferred at a temperature of 5°C. The monosaccharides and/or disaccharides can also be added to the composition as pure compounds, for example as glucose, or fructose, or sucrose.

In order to ensure the composition is not spoiled during storage, the water activity should be low enough to prevent growth of moulds and yeasts and other undesired micro-organisms. Therefore, the composition has a water activity (Aw) ranging from 0.85 to 0.89. Generally, most spore forming bacteria do not grow at these water activities. Yeasts and moulds may grow at these water activities, which may lead to spoilage of the product. However, we have now found, that in spite of the absence of preservatives, on particular yeasts and/or moulds do not grow during the shelf-life, in spite of the water activity of the composition, which is still relatively high (due to the relatively low salt concentration). Preferably, the composition has an edible oil content of less than 2.5% by weight, preferably less than 2% by weight. Preferably the edible oil content is less than 1.5%, more preferred less than 1% by weight. In case edible oils are present, then preferably these are added as part of other ingredients. Preferably pure edible oils are not added to the composition during preparation of the composition. The term "edible oil" as used herein refers to lipids selected from triglycerides, diglycerides, monoglycerides and combinations thereof. Preferably the oil in the context of this invention comprises at least 90 wt% of triglycerides, more preferably at least 95 wt%. Edible oils in the context of this invention include vegetable oils which are liquid at 5°C, and also dairy oils, which generally are solid at 5°C. Such oils include for example sunflower oil, rapeseed oil, olive oil, soybean oil, butter fat and oil, and combinations of these oils.

Preferably, the total amount of hydrocolloids excluding starches is less than 1% by weight, preferably less than 0.5% by weight of the composition. Preferably the composition of the invention is free from hydrocolloids, with the exception of starches as indicated herein before. Preferably the composition does not contain hydrocolloids like gums (guar gum, xanthan gum, locust bean gum, gum Arabic, carrageenan), pectins, or other polysaccharides. Additionally, preferably the composition is free from insoluble fibre water-structurants, like cellulose fibres originating from citrus fruit or other vegetable sources.

The composition of the invention may contain a wide range of other ingredients, in order to provide taste to the composition and make it suitable to be used in combination with meat and/or vegetable dishes. Preferably such ingredients are from vegetable or botanic origin, although also such ingredients may be from animal origin. The concentration of such compounds preferably ranges from 0.1% to 40% by weight, preferably from 0.1 to 35% by weight, more preferred from 1% to 30% by weight. Preferably the composition of the invention comprises ingredients originating from vegetable sources or meat or meat extract. Such ingredients preferably comprise one or more of the following compounds: miso, mushroom powder or fresh mushroom, onion preparations like juice, concentrate, puree, garlic preparations like juice, concentrate, puree, soy sauce, meat or meat extracts, vegetable and/or fruit purees or concentrates.

These ingredients may naturally contain other compounds, such as salt (NaCl), or acetic acid, sugars, and edible oils. Also proteins and carbohydrates may be added with these ingredients. In case these amounts are substantial, then the amount of for instance salt or vinegar to be added to the composition to prepare a composition of the invention can be reduced, while still the concentrations of such ingredients will be within the range as required by this invention. Preferably the concentration of carbohydrates excluding the compounds selected from monosaccharides, disaccharides, and oligosaccharides preferably is maximally 13% by weight, preferably ranges from 3 to 12%, preferably ranges from 6 to 12% by weight. The amount of protein in the composition preferably is maximally 5% by weight, preferably ranges from 0.5 to 4%, preferably ranges from 1 to 4%.

The products of the invention can be prepared in a way which is common in the art. Therefore, in a second aspect the invention provides a method for preparation of a composition as defined in the first aspect of the invention, comprising the steps:
(i) mixing ingredients with water; and
(ii) heating the mixture from step (i); and
(iii) filling the mixture from step (ii) into packaging.

In step (i) the mixing of the ingredients can be done in a mixing vessel which is common in the art. In step (ii) the mixture from step (i) is pasteurised, and optionally starches if present are gelatinised during this step. Preferably the mixture is heated to a temperature ranging from 80°C to 90°C during a time period of between 1 and 10 minutes. Preferably the mixture is heated at a temperature of at least 85°C during a temperature of at least 85°C. Preferably the heating is done during a period of between 2 and 9 minutes, preferably between 3 and 8 minutes, preferably between 4 and 7 minutes. In step (iii) the mixture from step (ii) is filled into packaging material in order to be able to distribute the products to consumer. The packaging preferably is a bottle, or may also be any other suitable packaging material. The filling may be done after the product from step (ii) is cooled, or may be done when still hot.

In a third aspect, the invention provides use of a composition as defined in the first aspect of the invention to reduce the growth of yeasts and/or moulds in an aqueous food product. In here is meant that yeasts and/or moulds do not grow in the products of the invention, and even are inhibited or killed in case the composition would be contaminated.

Preferably the growth of any of the yeast genuses *Candida, Pichia,* and *Zygosaccharomyces* is reduced. More preferred the growth of any of the yeast species *Candida magnolia, Candida parapsilosis, Candida versatilis, Pichia membranaefaciens, Zygosaccharomyces bailii,* and *Zygosaccharomyces rouxii* is reduced.

Preferably the growth of any of the mould genuses *Eurotium, Penicillium, Paecilomyces, Cladosporium,* and *Aspergillus* is reduced. More preferred the growth of any of the mould species *Eurotium herbariorum, Eurotium amstelodami, Penicillium roquefortii, Penicillium brevicompactum, Paecilomyces variottii, Cladosporium cladosporioides, Aspergillus tamarii,* and *Aspergillus niger* is reduced.

In this aspect, the invention also provides a method to reduce the growth of yeasts and/or moulds in food products, by using a composition as defined in the first aspect of the invention. The preferred features mentioned above are also applicable to this method.

Except in the operating and comparative examples, or where otherwise explicitly indicated, all numbers in this description indicating amounts or ratios of material or conditions of reaction, physical properties of materials and/or use are to be understood as modified by the word "about".

### EXAMPLES

The following non-limiting examples illustrate the present invention.

### Raw materials

- Salt: NaCl suprasel ex Akzo Nobel (Amersfoort, Netherlands).
- Glucose syrup: 82% dry matter ex Lantmännen Reppe (Växjö, Sweden).
- Sucrose: white sugar W4 ex Suiker Unie (Oud Gastel, Netherlands).
- Vinegar: 20% spirit vinegar
- Physically modified starch: Physically modified waxy corn starch Novation Prima 300 ex Ingredion Inc. (Westchester, IL, USA).

### Example 1 - Compositions of the invention

Compositions of the invention were prepared, by the following general method. Water was dosed into a mixed vessel, and subsequently heated to 40 to 50°C. Glucose syrup was added, and mixed for 10 minutes. Other dry ingredients were subsequently added, and again mixed for 10 minutes. Next liquid and/or pasty and/or frozen raw materials were added, and mixed for 10 minutes. The mixture was then heated until 85°C, and held at that temperature for 5 minutes. Subsequently the mixture was cooled to a temperature below 25°C, and filled into bottles. Recipes of these composition are given in the following table.

**Table 1 Recipes of compositions of the invention**

| | **A** | **B** | **C** | **D** |
|---|---|---|---|---|
| drinking water | 39.2 | 34.9 | 36.55 | 52 |
| Salt | 8.5 | 10 | 10 | 11 |
| glucose syrup | 20 | 10 | 20 | 10 |
| Sucrose | | 6 | 1.25 | |
| physically modified starch | 0.5 | 1.5 | 3 | |
| vinegar | 4.8 | 3.6 | 3.9 | 5 |
| white miso paste, mushroom powders | 27 | | | |
| onion puree, garlic puree | | 34 | | |
| onion puree, smoke flavour | | | 25.3 | |
| mushroom powder | | | | 17 |
| onion puree | | | | 5 |

### Example 2 - Challenge Tests with Yeasts

The compositions from example 1 were tested on stability against spoilage by yeasts. The pH and water activity of these products as measured was the following:

**Table 2 pH and Aw of the compositions from example 1.**

| | *pH* | *Aw* |
|---|---|---|
| **A** | 4.15 | 0.87 |
| **B** | 3.55 | 0.87 |
| **C** | 3.55 | 0.89 |
| **D** | 4.15 | 0.87 |

Yeast inoculums containing the yeast species *Candida magnolia, Candida parapsilosis, Candida versatilis, Pichia membranaefaciens, Zygosaccharomyces bailli* (2 strains), and *Zygosaccharomyces rouxii* (2 strains) were prepared from in-house strains, stored at -80°C. After incubation of each strain, and preparing fresh cultures, an equal number of cells of each strain was taken and mixed together to obtain a cocktail with a concentration of 10⁶ cells/mL. This is the inoculum which was used to inoculate the products.

To inoculate the products, 10 to 30 gram of each product was taken, and inoculated with 0.1 mL per 10 gram product, to arrive at an inoculum level of 10³ to 5·10⁴ CFU/g (CFU = colony forming units). The number of samples for each product was such that in time, sufficient samples could be taken to determine the outgrowth of the yeasts. Each new sample requires a new vial. The samples were stored at 25 ± 2°C in the dark during 84 days. The inoculum concentration in the products in this test was 2·10⁴ CFU/g.

The outgrowth of the organisms in the compositions was followed by taking samples at regular intervals. The number of organisms in the samples was determined by plate count. At each sampling point 10 g of the inoculated product was diluted into 90 mL peptone buffered water solution and thoroughly mixed. The plating was performed using OCGY agar supplemented with oxytetracycline supplement. Plates were incubated at 25°C. The following table provides the growth counts of the yeasts in time, during storage of the product.

**Table 3 Yeast counts (log values of CFU/g) in compositions from example 1. Inoculum level is 4.3 (log value of 2·10⁴ CFU/g).**

| | *Time [day]* | | | | | | | | | |
|---|---|---|---|---|---|---|---|---|---|---|
| *Product* | 4 | 7 | 14 | 21 | 28 | 35 | 42 | 56 | 70 | 84 |
| **A** | 3.33 | 5.06 | 5.64 | 5.60 | 5.18 | 5.07 | 4.86 | 4.32 | 4.00 | 4.03 |
| **B** | 2.81 | 1.40 | 0.00 | 0.00 | 0.00 | 0.00 | 0.00 | 0.00 | 0.00 | 0.00 |
| **C** | 0.00 | 0.00 | 0.00 | 0.00 | 0.00 | 0.00 | 0.00 | 0.00 | 0.00 | 0.00 |
| **D** | 3.81 | 3.60 | 3.28 | 3.85 | 3.67 | 3.87 | 3.83 | 3.91 | 3.36 | 4.28 |

These results show that product A after an initial rise of the yeast count, the yeast counts returns to the inoculated value. Yeasts do not proliferate during storage. In products B and C, the yeast count rapidly goes to zero, meaning that the yeasts in this test do not survive in these products. In product D the yeast counts remain a bit below the inoculated value, therefore also in this product y in this test the yeasts do not proliferate during storage.

These data show that at relatively low salt levels, a composition is prepared which is not vulnerable for spoilage by yeasts, in spite of its relatively high water activity. Consequently, the compositions of the invention can be stored during a long time period. In particular the two compositions having the lowest pH had a good score with regard to the level of yeasts.

## Claims

1. A composition comprising
9-14% by weight of sodium chloride and/or potassium chloride;
7-22% by weight of one or more compounds selected from monosaccharides, disaccharides, and oligosaccharides;
0.5-2% by weight of acetic acid;
0-3% by weight of physically modified starch;
50-70% by weight of water;
and having a pH ranging from 3.0 to 4.6;
and having a water activity ranging from 0.85 to 0.89;
and wherein the composition is free from chemically modified starches, enzymatically modified starches, and native starches.

2. A composition according to claim 1, wherein the composition is an edible composition.

3. A composition according to claim 1 or 2, comprising from 9 to 13% by weight of sodium chloride and/or potassium chloride, preferably from 9 to 12% by weight, preferably from 9 to 10% by weight, preferably from 9 to less than 10% by weight, preferably from 9 to 9.9% by weight.

4. A composition according to any of claims 1 to 3, wherein the composition comprises a preservative at a concentration of less than 0.1% by weight, preferably is free from a preservative.

5. A composition according to any of claims 1 to 4, wherein the concentration of physically modified starch ranges from 0 to less than 3% by weight, preferably from 0 to 2% by weight.

6. A composition according to any of claims 1 to 5, wherein the physically modified starch is obtainable by drying native starch to a relative humidity of less than 3%, and subsequently heating the starch at a temperature ranging from 150°C to 200°C during a time period of at least 30 minutes.

7. A composition according to any of claims 1 to 6, wherein the physically modified starch comprises physically modified waxy corn starch.

8. A composition according to any of claims 1 to 7, wherein the composition comprises glucose syrup to provide one or more compounds selected from monosaccharides, disaccharides, and oligosaccharides.

9. A composition according to any of claims 1 to 8, having an edible oil content of less than 2.5% by weight, preferably less than 2% by weight, preferably less than 1% by weight.

10. A composition according to any of claims 1 to 9, wherein the total amount of hydrocolloids excluding starches is less than 1% by weight, preferably less than 0.5% by weight.

11. A composition according to any of claims 1 to 10, wherein the composition comprises ingredients originating from vegetable sources or meat or meat extract.

12. A method for preparation of a composition according to any of claims 1 to 11, comprising the steps:
(i) mixing ingredients with water; and
(ii) heating the mixture from step (i); and
(iii) filling the mixture from step (ii) into packaging.

13. Use of a composition according to any of claims 1 to 11 to reduce the growth of yeasts and/or moulds in an aqueous food product.

## Patentansprüche

1. Zusammensetzung, umfassend
9-14 Gew.-% Natriumchlorid und/oder Kaliumchlorid;
7-22 Gew.-% einer oder mehrerer Verbindungen, ausgewählt unter Monosacchariden, Disacchariden und Oligosacchariden;
0,5-2 Gew.-% Essigsäure;
0-3 Gew.-% physikalisch modifizierte Stärke;
50-70 Gew.-% Wasser;
und mit einem pH-Wert im Bereich von 3,0 bis 4,6;
und mit einer Wasseraktivität im Bereich von 0,85 bis 0,89;
und wobei die Zusammensetzung frei von chemisch modifizierten Stärken, enzymatisch modifizierten Stärken und nativen Stärken ist.

2. Zusammensetzung nach Anspruch 1, wobei die Zusammensetzung eine essbare Zusammensetzung ist.

3. Zusammensetzung nach Anspruch 1 oder 2, umfassend 9 bis 13 Gew.-% Natriumchlorid und/oder Kaliumchlorid, vorzugsweise 9 bis 12 Gew.-%, vorzugsweise 9 bis 10 Gew.-%, vorzugsweise 9 bis weniger als 10 Gew.-%, vorzugsweise 9 bis 9,9 Gew.-%.

4. Zusammensetzung nach einem der Ansprüche 1 bis 3, wobei die Zusammensetzung ein Konservierungsmittel in einer Konzentration von weniger als 0,1 Gew.-% enthält, vorzugsweise frei von einem Konservierungsmittel ist.

5. Zusammensetzung nach einem der Ansprüche 1 bis 4, wobei die Konzentration an physikalisch modifizierter Stärke im Bereich von 0 bis weniger als 3 Gew.-% liegt, vorzugsweise von 0 bis 2 Gew.-%.

6. Zusammensetzung nach einem der Ansprüche 1 bis 5, wobei die physikalisch modifizierte Stärke durch Trocknen von nativer Stärke auf eine relative Feuchte von weniger als 3% und durch anschließendes Erhitzen der Stärke auf eine Temperatur im Bereich von 150°C bis 200°C während eines Zeitraums von mindestens 30 Minuten erhältlich ist.

7. Zusammensetzung nach einem der Ansprüche 1 bis 6, wobei die physikalisch modifizierte Stärke physikalisch modifizierte Wachsmaisstärke umfasst.

8. Zusammensetzung nach einem der Ansprüche 1 bis 7, wobei die Zusammensetzung Glukosesirup umfasst, um eine oder mehrere Verbindungen bereitzustellen, die unter Monosacchariden, Disacchariden und Oligosacchariden ausgewählt sind.

9. Zusammensetzung nach einem der Ansprüche 1 bis 8 mit einem Gehalt an Speiseöl von weniger als 2,5 Gew.-%, vorzugsweise von weniger als 2 Gew.-%, vorzugsweise von weniger als 1 Gew.-%.

10. Zusammensetzung nach einem der Ansprüche 1 bis 9, wobei die Gesamtmenge an Hydrokolloiden ohne Stärke weniger als 1 Gew.-% beträgt, vorzugsweise weniger als 0,5 Gew.-%.

11. Zusammensetzung nach einem der Ansprüche 1 bis 10, wobei die Zusammensetzung Inhaltsstoffe umfasst, die aus pflanzlichen Quellen oder aus Fleisch oder Fleischextrakt stammen.

12. Verfahren zur Herstellung einer Zusammensetzung nach einem der Ansprüche 1 bis 11, umfassend die folgenden Schritte:
(i) Mischen der Zutaten mit Wasser; und
(ii) Erhitzen der Mischung aus Schritt (i); und
(iii) Abfüllen der Mischung aus Schritt (ii) in eine Verpackung.

13. Verwendung einer Zusammensetzung nach einem der Ansprüche 1 bis 11 zur Verringerung des Wachstums von Hefen und/oder Schimmelpilzen in einem wässrigen Lebensmittelprodukt.

## Revendications

1. Composition comprenant
9 à 14 % en poids de chlorure de sodium et/ou de chlorure de potassium ;
7 à 22 % en poids d'un ou plusieurs composés choisis parmi les monosaccharides, les disaccharides et les oligosaccharides ;
0,5 à 2 % en poids d'acide acétique ;
0 à 3 % en poids d'amidon physiquement modifié ;
50 à 70 % en poids d'eau ;
et ayant un pH situé dans la plage allant de 3,0 à 4,6 ;
et ayant une activité de l'eau située dans la plage allant de 0,85 à 0,89 ;
et dans laquelle la composition est exempte d'amidons chimiquement modifiés, d'amidons enzymatiquement modifiés, et d'amidons natifs.

2. Composition selon la revendication 1, dans laquelle la composition est une composition comestible.

3. Composition selon la revendication 1 ou 2, comprenant 9 à 13 % en poids, de préférence 9 à 12 % en poids, de préférence 9 à 10 % en poids, de préférence 9 à moins de 10 % en poids, de préférence 9 à 9,9 % en poids de chlorure de sodium et/ou de chlorure de potassium.

4. Composition selon l'une quelconque des revendications 1 à 3, dans laquelle la composition comprend un conservateur à une concentration inférieure à 0,1 % en poids, de préférence est exempte de conservateur.

5. Composition selon l'une quelconque des revendications 1 à 4, dans laquelle la concentration d'amidon physiquement modifié est située dans la plage allant de 0 à moins de 3 % en poids, de préférence de 0 à 2 % en poids.

6. Composition selon l'une quelconque des revendications 1 à 5, dans laquelle l'amidon physiquement modifié peut être obtenu par séchage d'amidon natif jusqu'à une humidité relative inférieure à 3 % et ensuite chauffage de l'amidon à une température située dans la plage allant de 150°C à 200°C pendant une période de temps d'au moins 30 minutes.

7. Composition selon l'une quelconque des revendications 1 à 6, dans laquelle l'amidon physiquement modifié comprend de l'amidon de maïs cireux physiquement modifié.

8. Composition selon l'une quelconque des revendications 1 à 7, dans laquelle la composition comprend du sirop de glucose destiné à apporter un ou plusieurs composés choisis parmi les monosaccharides, les disaccharides et les oligosaccharides.

9. Composition selon l'une quelconque des revendications 1 à 8, ayant une teneur en huiles comestibles inférieure à 2,5 % en poids, de préférence inférieure à 2 % en poids, de préférence inférieure à 1 % en poids.

10. Composition selon l'une quelconque des revendications 1 à 9, dans laquelle la quantité totale d'hydrocolloïdes à l'exclusion des amidons est inférieure à 1 % en poids, de préférence inférieure à 0,5 % en poids.

11. Composition selon l'une quelconque des revendications 1 à 10, dans laquelle la composition comprend des ingrédients issus de sources végétales ou de viande ou d'extrait de viande.

12. Procédé pour préparer une composition selon l'une quelconque des revendications 1 à 11, comprenant les étapes de :
(i) mélange d'ingrédients avec de l'eau ; et
(ii) chauffage du mélange obtenu dans l'étape (i) ; et
(iii) remplissage d'un conditionnement avec le mélange obtenu dans l'étape (ii).

13. Utilisation d'une composition selon l'une quelconque des revendications 1 à 11 pour réduire la croissance des levures et/ou des moisissures dans un produit alimentaire aqueux.
